# EUROPÄISCHE PATENTSCHRIFT

(11) **EP 2 335 794 B1**
(45) Veröffentlichungstag und Bekanntmachung des Hinweises auf die Patenterteilung: **26.06.2013**
(21) Anmeldenummer: 10191420.8
(22) Anmeldetag: 16.11.2010
(51) Int. Cl.: E03F 5/16, B01D 17/02, E03F 5/14, E03B 3/00

(54) **Flüssigkeits-Rückhaltevorrichtung**
Fluid retention device
Dispositif de retenue de liquide

(30) Priorität: 01.12.2009 DE 102009056276
(43) Veröffentlichungstag der Anmeldung: 22.06.2011
(73) Patentinhaber: GS Gesellschaft für Umweltschutz mbH, 48529 Nordhorn (DE)
(72) Erfinder: Thannhäuser, Ingo, 48465, Samern (DE)
(74) Vertreter: Werner & ten Brink

(56) Entgegenhaltungen:
- EP-A1- 0 389 275
- DE-A1- 10 255 750
- US-A1- 2005 072 738

## Beschreibung

Die Erfindung betrifft eine Flüssigkeits-Rückhaltevorrichtung, im Folgenden kurz als Rückhaltevorrichtung bezeichnet, gemäß dem Oberbegriff des Anspruchs 1.

Flüssigkeits-Abscheidevorrichtungen (Abscheidevorrichtung) als Sonderform einer Rückhaltevorrichtung, insbesondere für zumindest zwei Flüssigkeiten, welche voneinander verschiedene spezifische Gewichte haben und im Wesentlichen nicht oder nur wenig mischbar sind, sind allgemein bekannt. Dabei wird ausgenutzt, dass sich die Flüssigkeit mit dem geringeren spezifischen Gewicht, also die leichtere Flüssigkeit, über der Flüssigkeit mit dem höheren spezifischen Gewicht, also der schwereren Flüssigkeit, sammelt und sich so nach einer Ruhezeit zwei übereinandergeschichtete Phasen bilden. Aus der jeweiligen Phase kann dann die entsprechende Flüssigkeit im Wesentlichen rein gewonnen werden. Bei einem Beispiel einer herkömmlichen Abscheidevorrichtung, hier einem nach oben offenen Ölabscheider, leitet ein schräger Regenfang Regenwasser in eine Rückspülkammer, so dass sich diese schneller füllt als ein Auffangbehälter, in dem sich Öl befindet. Hierdurch wird zwar zunächst verhindert, dass bei Regen Teile des auf dem sich sammelnden Regenwasser schwimmenden Ölfilms aus dem Auffangbehälter in die Rückspülkammer gelangen, jedoch tritt, wenn ein Flüssigkeitsspiegel im Auffangbehälter eine Trennwand zwischen Rückspülkammer und Auffangbehälter zunächst überschritten hatte, bei einem späteren Absinken des Flüssigkeitsspiegels Öl auch in die Rückspülkammer über. Ein großer Teil dieses Öls gelangt bei einem erneuten Füllen der Rückspülkammer nicht entlang einer Leitwand des Regenfangs zurück in den Auffangbehälter und verunreinigt so das aus der Rückspülkammer abfließende Wasser. Eine solche Vorrichtung ist in der DE 102 55 750 A beschrieben. Aus der EP 0389 275 A ist eine Abscheidevorrichtung mit einem Einlass und zwei Auslässen bekannt, wobei innerhalb der Abscheidevorrichtung zwei Fließwege gebildet sind und die Auslässe am Ende jeweils eines Fließwegs liegen. Aus der US 2005/0072738 A ist eine Abscheide- und Entwässerungsvorrichtung für den Straßenbau oder dergleichen bekannt.

Derartige Abscheidevorrichtungen lassen zudem außer Acht, dass eine dort für die erreichbare Wirkung vorausgesetzte Phasentrennung häufig nicht gegeben ist, z.B. dann, wenn die spezifischen Gewichte beider Flüssigkeiten ähnlich sind, wie dies z.B. bei Wasser mit einem spezifischen Gewicht von 1,0 oder zumindest näherungsweise 1,0 und Esteröl mit einem spezifischen Gewicht von 0,977 gegeben ist. Solche Flüssigkeiten entmischen sich erst nach einer relativ langen Ruhezeit und bilden erst dann getrennte Phasen. Bis zur Entmischung liegen beide Flüssigkeiten als Emulsion vor. Besonders wenn in dem Auffangbehälter der Flüssigkeitsspiegel aufgrund von Regen ansteigt, ergibt sich durch das ständige Auftreffen der Regentropfen auf die Flüssigkeitsoberfläche eine Durchmischung, also eine Emulsion, des Wassers mit dem Öl. Bei der zuvor beschriebenen, bekannten Abscheidevorrichtung kommt es daher zumindest immer dann, wenn die vom Wasser abzuscheidende Flüssigkeit, z.B. Esteröl, mit Wasser in Emulsion vorliegt, gerade nicht zu einer Abscheidung und es fließt statt dessen die Emulsion ab. Der beabsichtigte Schutz der jeweiligen Umgebung vor Verunreinigungen durch Öl oder dergleichen tritt also gerade nicht ein.

Der Erfindung liegt daher als eine Aufgabe zugrunde, die o. g. Nachteile zu vermeiden oder zumindest in ihrer Auswirkung zu reduzieren.

Die Aufgabe wird erfindungsgemäß mit den Merkmalen des Anspruchs 1 gelöst. Dazu ist bei einer Rückhaltevorrichtung mit einem Sammler (z. B. Regenfang), insbesondere einem Rampenbauteil, und einem daran an schließenden Zulauf, also z. B. einem an oder in dem Rampenbauteil gebildeten Zulauf, einer Ablauföffnung und einer Sperre, ein Kanal im Anschluss an den Sammler vorgesehen, wobei der Kanal im Bereich des Zulaufs beginnt und in einem an einer Unterseite der Sperre freibleibenden Durchlass endet. Des Weiteren liegt die Ablauföffnung in dem Kanal oberhalb des Durchlasses, und der Zulauf liegt oberhalb der Ablauföffnung.

Mit der Rückhaltevorrichtung gelingt eine Verhinderung eines Abflusses (Rückhalt) einer ersten Flüssigkeit, z.B. Öl, die sich aufgrund eines im Vergleich zu einer zweiten Flüssigkeit geringeren spezifischen Gewichts auf dieser absetzt oder mit dieser in Emulsion vorliegt. Darüber hinaus ist, wenn die beiden Flüssigkeiten nicht vermischt sind, mit der Rückhaltevorrichtung auch eine solche erste Flüssigkeit von einer zweiten Flüssigkeit abscheidbar. Die erste Flüssigkeit ist bevorzugt eine Leichtflüssigkeit, z. B. Öl, insbesondere Esteröl, Leichtöl, Benzin, Dieselkraftstoff, Benzol oder dergleichen, und die zweite Flüssigkeit ist z. B. Wasser oder ähnliches. Die Beschreibung wird zur besseren Verständlichkeit, aber ohne Verzicht auf den weitergehenden Bedeutungsumfang, für Öl als erste Flüssigkeit und Wasser als zweite Flüssigkeit fortgesetzt. Beim Rückhalt oder der Abscheidung gelangt Wasser durch den Durchlass in den Kanal und verlässt den Kanal durch oder über die Ablauföffnung. Ein Eintrag von Öl in den Kanal und/oder Durchlass wird verhindert oder eingetragenes Öl entfernt, da der Zulauf oberhalb der Ablauföffnung angeordnet ist und die Ablauföffnung oberhalb des Durchlasses. Wasser, das über den Zulauf in die Rückhaltevorrichtung gelangt, spült also den Kanal und hält so Öl oder dergleichen vom Durchlass, zumindest aber von der Ablauföffnung, fern. Die Spülwirkung ergibt sich dabei, indem die Weite des Kanals und/oder des Durchlasses ausreichend klein gewählt ist bzw. sind, so dass sich im Kanal für die beabsichtigte Spülwirkung ausreichende Strömungsgeschwindigkeiten einstellen. Wenn die Rückhaltevorrichtung zum Abscheiden einer ersten Flüssigkeit von einer zweiten Flüssigkeit verwendet wird, rechtfertigt sich auch eine Bezeichnung als Abscheidevorrichtung. Die Beschreibung wird allerdings mit der Bezeichnung der Vorrichtung als Rückhaltevorrichtung fortgesetzt.

Die Rückhaltevorrichtung kann in einem Auffangbehälter positioniert sein oder mit einem solchen kombiniert sein. Wenn der Auffangbehälter nach oben offen ist, kann dieser einfach unter einer Vorrichtung oder einem Aggregat, welche bzw. welches die erste Flüssigkeit abgibt, also z. B. einem Motor oder dergleichen, der Öl, Benzin oder Dieselkraftstoff als Tropfmenge abgibt, positioniert werden, so dass die erste Flüssigkeit in den Auffangbehälter abläuft oder tropft.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

In einer Ausführungsform ist der Kanal aufwärts geneigt. Die Neigung des Kanals kann die Spülwirkung verbessern. Weiter kann vorgesehen sein, dass die Ablauföffnung in einer nach oben gerichteten Seitenwand (Oberseite) des aufwärts geneigten Kanals angeordnet ist, was gewährleistet, dass durch den Zulauf eingelassene Flüssigkeit nicht gleich wieder durch die Ablauföffnung abläuft.

Gemäß einer weiteren Ausführungsform ist die Sperre im Bereich des Durchlasses aufgeweitet. Die Sperre grenzt so an den Kanal und bestimmt somit zumindest teilweise dessen Form, insbesondere Querschnitt. Beispielsweise ist eine Seitenwand der Sperre identisch mit einer Seitenwand des Kanals. Hierdurch werden Kosten reduziert.

In einer weiteren Ausführungsform weist zur Aufweitung der Sperre ein unterer Teil derselben eine konvexe, insbesondere polygonale Geometrie auf. Insbesondere ist der untere Teil als Dreieck ausgebildet, so dass eine durchströmbare Länge des Durchlasses vergrößert wird und der Durchlass damit zu einem an den Kanal anschließenden Kanalabschnitt wird. Des Weiteren bildet eine nicht an den Kanal grenzende Seitenwand der Sperre eine Abscheiderfläche. An dieser wird ein Aufstiegsweg von Tröpfchen der ersten Flüssigkeit durch die zweite Flüssigkeit verkürzt, was eine Phasentrennung verbessert.

In einer nochmals weiteren Ausführungsform grenzt bei einer dreieckigen Geometrie des unteren Teils der Sperre - Sperrenunterteil - ein Basisabschnitt des dreieckigen Sperrenunterteils an den Durchlass an, was eine besonders einfache und kostengünstige Bauweise gewährleistet. Der untere Teil der Sperre kann jedoch auch an den Durchlass angrenzen, wenn der untere Teil eine von der dreieckigen Geometrie abweichende polygonale Geometrie aufweist.

Bevorzugt ist die Sperre in vertikaler Orientierung derart dimensioniert, dass sich ein oberer Endpunkt der Sperre oberhalb des Kanals ergibt. Somit bildet die Sperre eine Leitvorrichtung für den Zulauf und bestimmt das im Auffangbehälter zurückhaltbare Flüssigkeitsvolumen.

Bevorzugt umfasst die Rückhaltevorrichtung eine unterhalb der Sperre, also unterhalb des Durchlasses, angeordnete Schwelle. Mittels der Schwelle ist sichergestellt, dass bei einer geringen Füllhöhe des Auffangbehälters die erste und/oder zweite Flüssigkeit nicht in den Durchlass gelangt.

Besonders bevorzugt weist die Schwelle auf einer Oberseite eine einen Abschnitt des Kanals bildende Fläche auf. Dies ist besonders kostengünstig und Gewicht sparend, da auf ein gesondertes Bauteil verzichtet wird.

Die Fläche ist besonders bevorzugt horizontal angeordnet, was eine Herstellung vereinfacht. Alternativ kann die Fläche vom Kanal ausgehend nach unten geneigt sein. Dies ist vorteilhaft, wenn der Auffangbehälter z. B. nur bis unterhalb der Schwelle gefüllt ist, da so im Durchlass vorhandene Flüssigkeit oder Reste von erster und/oder zweiter Flüssigkeit besonders gut vom Kanal weggeführt werden.

Bei einer über die Rampe zuströmenden Flüssigkeit, insbesondere Regenwasser, strömt diese vom Zulauf bis zum Durchlass und spült so den Kanal oder den Kanal und den Durchlass besonders gut und/oder verhindert ein Eintreten der ersten Flüssigkeit oder einer Emulsion beider Flüssigkeiten in den Durchlass und/oder Kanal. Somit kann das durch die Ablauföffnung austretende Wasser nicht mit Öl oder ähnlichem verunreinigt werden.

Weiter bevorzugt ist eine der Ablauföffnung nachgeordnete Auffangwanne für abgelaufenes Wasser vorgesehen. In der Auffangwanne wird dieses zumindest temporär zurückgehalten und steht so beispielsweise für eine Reinheitsüberprüfung zur Verfügung oder kann bei Bedarf über das Rampenbauteil erneut der Rückhaltevorrichtung als Spülflüssigkeit zugeführt werden.

Die Rückhaltevorrichtung und/oder deren Komponenten wie vorhergehend und nachfolgend beschrieben kann/können aus Metall, z. B. Stahl, insbesondere Edelstahl, Aluminium oder dergleichen sein, es ist jedoch auch möglich, die Rückhaltevorrichtung und/oder deren Komponenten aus anderen geeigneten Materialien herzustellen oder diese mit anderen Materialien zu beschichten. So eignen sich beispielsweise Kunststoffe, welche jedoch resistent gegen die erste und zweite Flüssigkeit sein müssen, aufgrund geringerer Materialkosten im Vergleich zu z. B. Edelstahl, einfacher Verarbeitbarkeit durch Pressen, Gießen, Kleben oder dergleichen, ihrem geringen Gewicht und langer Lebensdauer besonders gut.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine schematisch vereinfachte Darstellung eines Längsschnitts einer Flüssigkeits-Abscheidevorrichtung gemäß dem Stand der Technik und
- Fig. 2: eine schematisch vereinfachte Darstellung eines Längsschnitts einer Rückhaltevorrichtung gemäß einer Ausführungsform der Erfindung.

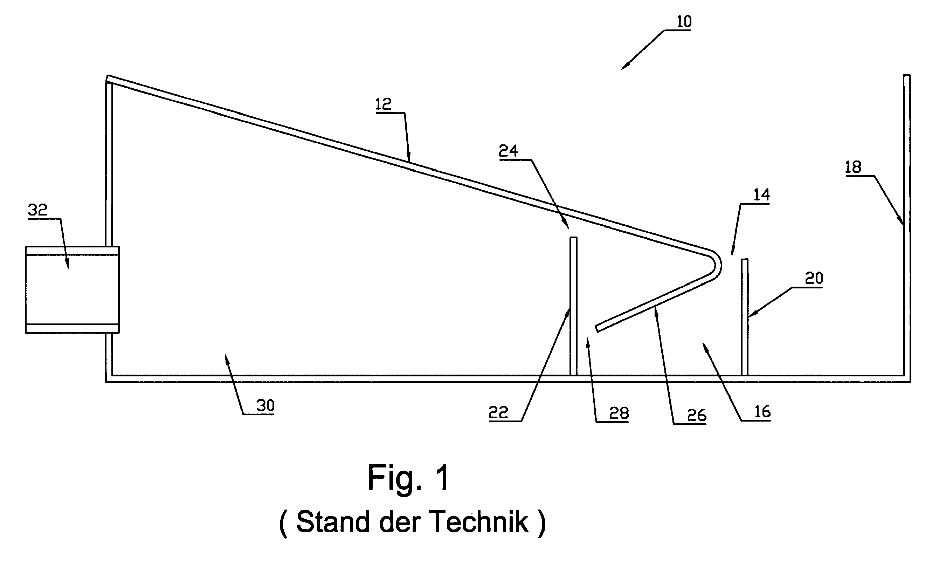

Fig. 1 zeigt eine schematisch vereinfachte Darstellung eines Längsschnitts einer Flüssigkeits-Abscheidevorrichtung 10 gemäß dem Stand der Technik mit einem als Regenfang fungierenden Rampenbauteil 12 und einem daran anschließenden Zulauf 14 in eine Rückspülkammer 16, welche gegen einen Auffangbehälter 18 mittels einer ersten Trennwand 20 abgegrenzt ist, so dass der Zulauf 14 auch zum Auffangbehälter 18 offen ist.

Die Rückspülkammer 16 wird des Weiteren von einer zweiten Trennwand 22 begrenzt, welche höher als die erste Trennwand 20 ist und welche eine oberhalb des Zulaufs 14 liegende Überlaufkante 24 bildet, über welche Flüssigkeit aus der Rückspülkammer 16 ablaufen kann. Eine mit dem Rampenbauteil 12 verbundene Leitwand 26 erstreckt sich vom Zulauf 14 abwärts gerichtet und teilweise unter das Rampenbauteil 12 in die Rückspülkammer 16. Die Leitwand 26 bildet mit der zweiten Trennwand 22 eine unter dem Zulauf 14 liegende Durchtrittsöffnung 28. Somit ist also die Überlaufkante 24 oberhalb des Zulaufs 14 und dieser oberhalb der Durchtrittsöffnung 28 angeordnet. Die Überlaufkante 24 führt in eine Auffangwanne 30, welche einen unterhalb der Ablauföffnung 28 angeordneten Ablauf 32 hat.

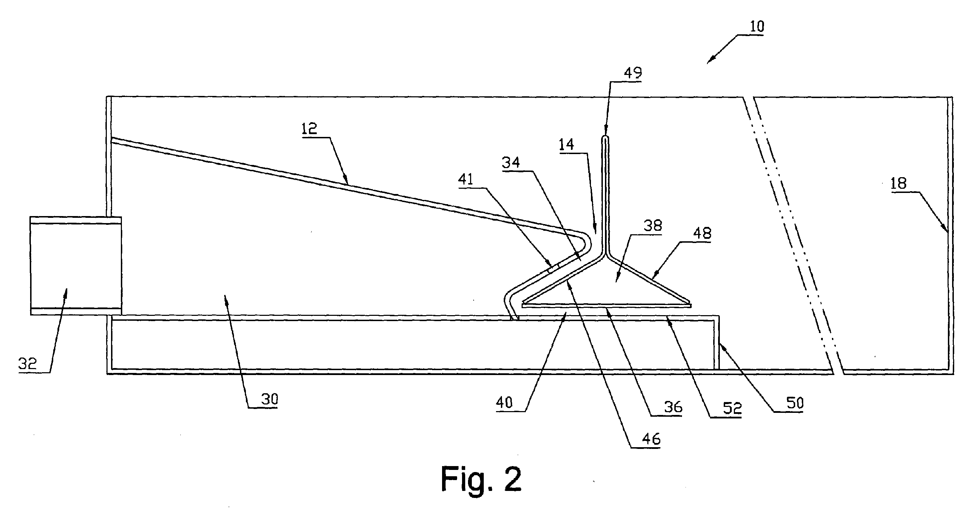

Fig. 2 zeigt eine schematisch vereinfachte Darstellung eines Längsschnitts einer Rückhaltevorrichtung 10 gemäß einer Ausführungsform der Erfindung mit dem Rampenbauteil 12, wobei das Rampenbauteil 12 stellvertretend für alle geeigneten Sammler dargestellt ist, und einem daran anschließenden Zulauf 14 für einen Kanal 34. Der Kanal 34, welcher im Bereich des Zulaufs 14 beginnt, mündet in einem an einer Unterseite 36 einer Sperre 38 freibleibenden Durchlass 40, so dass der Zulauf 14 oberhalb des Durchlasses 40 liegt. Im Kanal 34 liegt eine Ablauföffnung 41 unterhalb des Zulaufs 14 und oberhalb des Durchlasses 40.

In der in Fig. 2 dargestellten Ausführungsform schließt die Auffangwanne 30 mit Ablauf 32 an die Ablauföffnung 41 an. In einer nicht dargestellten, optionalen Ausführungsform kann in der Auffangwanne 30 eine Überlaufwand vorgesehen sein, die zwischen dieser und der Rückhaltevorrichtung 10 eine Vorkammer definiert. Eine Oberkante einer solchen Überlaufwand läge oberhalb der Ablauföffnung 41. Eine solche Überlaufwand und durch diese vor dem Ablauf 32 gebildete Vorkammer kann sinnvoll sein, wenn Mittel, z.B. ein Ventil, vorgesehen sind, um den Ablauf 32 automatisch zu schließen. Eine Sensorik zur Ansteuerung des Ventils könnte in der Vorkammer angeordnet sein, so dass eine evtl. sich hier - gleich aus welchen Gründen - ergebende Verunreinigung zum Schließen des Ventils führt und damit jedenfalls ein Austritt der Verunreinigung sicher verhindert ist.

Die Sperre 38 ist im Bereich des Durchlasses 40 so aufgeweitet, dass sie in einem unteren Teil als Dreieck (im Querschnitt) ausgebildet ist, dessen Unterseite 36 an den Durchlass 40 grenzt. Eine erste Seitenwand 46 der Sperre 38 grenzt an den Kanal 34, welcher aufwärts geneigt ist. Eine zweite Seitenwand 48 der Sperre bildet eine an den Durchlass 40 grenzende Abscheiderfläche. Ein Endpunkt 49 der Sperre 38 liegt oberhalb des Kanals 34, so dass die Sperre 38 eine Leitvorrichtung für den Zulauf 14 bildet.

In der hier dargestellten Ausführungsform umfasst die Rückhaltevorrichtung 10 eine unterhalb der Sperre 38 angeordnete Schwelle 50 mit einer Oberseite 52 mit einer einen Abschnitt des Kanals 34 bildende Fläche.

Bei Regen fließt das Regenwasser vom Rampenbauteil 12 durch den Zulauf 14 in den Kanal 34, vorbei an der Ablauföffnung 41 und zum Durchlass 40. Vom Durchlass 40 gelangt es in den Auffangbehälter 18 und spült so eventuell im Kanal 34 oder im Durchlass 40 vorhandene erste Flüssigkeit oder eine Emulsion mit der ersten Flüssigkeit zurück in den Auffangbehälter 18. Dieser füllt sich, auch durch von oben eingetragenes Regenwasser, und selbst wenn der Flüssigkeitsspiegel im Auffangbehälter 18 bis an eine Unterkante der zweiten Seitenwand 48, also über den Durchlass 40, steigt, kann die erste Flüssigkeit (auch in Emulsion mit der zweiten Flüssigkeit) nicht wieder in den Durchlass 40 gelangen, da das vom Rampenbauteil 12 zuströmendes Regenwasser die erste Flüssigkeit vom Durchlass 40 fernhält. Sobald sich eine Emulsion mit der ersten Flüssigkeit oder eine von der ersten Flüssigkeit gebildete Phase oberhalb des Durchlasses 40 befindet, gelangt nur noch Wasser aus dem Auffangbehälter 18 in den Durchlass 40; die Gefahr, dass die erste Flüssigkeit hineingelangt, ist somit gebannt. Es wird also, aufgrund der Anordnung von Zulauf 14, Ablauföffnung 41 und Durchlass 40, wenn Wasser über das Rampenbauteil 12 in den Zulauf 14 strömt, eventuell vorhandene erste Flüssigkeit durch den Kanal 34 und von der Ablauföffnung 41 weg durch den Durchlass 40 gespült oder an einem Eintreten in den Kanal 34 durch den Durchlass 40 hindurch gehindert. Somit kann das durch die Ablauföffnung 41 austretende Wasser nicht mit Öl oder ähnlichem verunreinigt werden. Der Kanal 34 und/oder der Durchlass 40 sind dabei hinsichtlich ihrer Weite so bemessen - also klein gehalten - dass das eingeleitete Regenwasser mit hoher Geschwindigkeit und hohem Druck durch Kanal 34 und Durchlass 40 strömt und dabei das Fernhalten oder Beseitigen der ersten Flüssigkeit oder einer Emulsion mit der ersten Flüssigkeit zumindest im Kanal 34 bewirkt. Zur Erhöhung der Menge des durch Kanal 34 und Durchlass 40 strömenden Wassers können an den Sammler, also z.B. das Rampenbauteil 12, zusätzliche Auffangflächen (nicht dargestellt) angefügt sein. Die Oberfläche der oder jeder derartigen Auffangfläche erhöht gleichsam die Oberfläche des Sammlers und entsprechend steigt bei Regenfall die Wassermenge, mit der der Kanal 34 und der Durchlass 40 gespült werden.

Nicht gezeigt ist eine spezielle Ausführungsform, bei der im Ablauf 32 ein Ventil vorgesehen ist. Bei dem Ventil handelt es sich bevorzugt um ein elektrisch ansteuerbares Ventil. Die Ansteuerung des Ventils erfolgt aufgrund einer Sensorik, mit der z.B. entweder ein Druckabfall in einem in dem Auffangbehälter 18 positionierten Aggregat oder eine Verunreinigung der Flüssigkeit im Auffangbehälter 18, in der Rückhaltevorrichtung 10 oder vor dem Ablauf 32 sensiert wird. Aufgrund eines entsprechenden Sensorsignals erfolgt eine Ansteuerung des Ventils, so dass der Ablauf 32 geschlossen wird. Mit dem Ventil ist eine nahezu vollständige Sicherheit bei der Vermeidung von Verunreinigungen durch austretendes Öl oder dergleichen gewährleistet. Die Ergänzung der Rückhaltevorrichtung 10 um ein derartiges Ventil, das im übrigen z.B. auch in der Ablauföffnung 41 oder im Anschluss an diese vorgesehen sein kann, kommt speziell dann in Betracht, wenn besonders hohe Sicherheitsanforderungen zu erfüllen sind und die an sich gegebene Garantie zur Vermeidung von Verunreinigungen aufgrund der sich mit der Rückhaltevorrichtung mit Kanal 34 und Durchlass 40 ergebenden hydrodynamischen Verhältnisse als nicht ausreichend erachtet werden sollte. Das Ventil kann beheizbar ausgeführt sein, so dass z.B. bei Temperaturen um den Gefrierpunkt eine Beheizung des Ventils erfolgen kann oder automatisch erfolgt um dessen dauerhafte Betriebsbereitschaft zu gewährleisten. Auch für die Rückhaltevorrichtung 10 selbst kommt eine Beheizbarkeit oder abschnittsweise Beheizbarkeit, wie oben für das Ventil skizziert, in Betracht. Das Ventil ist bevorzugt als stromlos offenes Ventil ausgeführt. Dem liegt die Erkenntnis zugrunde, dass ein solches Ventil normalerweise ständig offen ist und entsprechend eine Ansteuerung nur in einer durch das Sensorsignal angezeigten Sondersituation erfolgen soll. Die damit normalerweise nicht erforderliche Bestromung des Ventils vermeidet ansonsten erforderlichen Energieverbrauch und fügt sich somit nahtlos in das Konzept der ebenfalls zum Umweltschutz verwendbaren Rückhaltevorrichtung ein. Zum Sensieren eines evtl. Druckabfalls kommt jeder herkömmlich Drucksensor in Betracht. Die evtl. Sensierung eines Druckabfalls ist eine zumindest mittelbare Erkennung einer Verunreinigung vor der Rückhaltevorrichtung, weil der Druckabfall eine Leckage oder dergleichen anzeigt und eine solche Leckage normalerweise insofern also mittelbar erkannte Verunreinigung bewirkt; die Erkennung eines Druckabfalls kann also als Erkennung einer Verunreinigung aufgefasst werden. Zum Sensieren evtl. Verunreinigungen in, vor oder nach der Rückhaltevorrichtung kommt z.B. ein Sensor in Betracht, der die elektrische Leitfähigkeit der jeweiligen Flüssigkeit bestimmt. Ein Signal zur Ansteuerung des Ventils wird bei einem solchen Sensor bei einer Abweichung der sensierten Leitfähigkeit von einer erwarteten Leitfähigkeit um mehr als einen vorgegebenen oder vorgebbaren Schwellwert generiert.

Damit lässt sich die Erfindung kurz wie folgt darstellen: Angegeben wird eine Rückhaltevorrichtung 10 mit einem Sammler, insbesondere einem Rampenbauteil 12, und einem daran anschließenden Zulauf 14, einer Ablauföffnung 41 und einer Sperre 38, mit einem Kanal 34 im Anschluss an den Sammler, der im Bereich des Zulaufs 14 beginnt und in einem an einer Unterseite der Sperre 38 freibleibenden Durchlass 40 endet, wobei die Ablauföffnung 41 in dem Kanal 34 oberhalb des Durchlasses 40 liegt und wobei der Zulauf 14 oberhalb der Ablauföffnung 41 liegt.

### Bezugszeichenliste

- 10: Rückhaltevorrichtung
- 12: Rampenbauteil
- 14: Zulauf
- 16: Rückspülkammer
- 18: Auffangbehälter
- 20: erste Trennwand
- 22: zweite Trennwand
- 24: Überlaufkante
- 26: Leitwand
- 28: Durchtrittsöffnung
- 30: Auffangwanne
- 32: Ablauf
- 34: Kanal
- 36: Unterseite (einer Sperre)
- 38: Sperre
- 40: Durchlass
- 41: Ablauföffnung
- 46: erste Seitenwand
- 48: zweite Seitenwand
- 49: oberer Endpunkt (der Sperre)
- 50: Schwelle
- 52: Oberseite (der Schwelle)

## Patentansprüche

1. Rückhaltevorrichtung (10) mit einem Sammler, insbesondere einem Rampenbauteil (12), und einem daran anschließenden Zulauf (14), einer Ablauföffnung (41) und einer Sperre (38),
**gekennzeichnet durch**
einen Kanal (34) im Anschluss an den Sammler, der im Bereich des Zulaufs (14) beginnt und in einem an einer Unterseite der Sperre (38) freibleibenden Durchlass (40) endet,
wobei die Ablauföffnung (41) in dem Kanal (34) oberhalb des Durchlasses (40) liegt,
wobei der Zulauf (14) oberhalb der Ablauföffnung (41) liegt und
wobei die Sperre (38) im Bereich des Durchlasses (40) aufgeweitet ist.

2. Rückhaltevorrichtung nach Anspruch 1, wobei der Kanal (34) aufwärts geneigt ist.

3. Rückhaltevorrichtung nach Anspruch 1 oder 2, wobei zur Aufweitung der Sperre (38) ein unterer Teil derselben eine konvexe, insbesondere polygonale, Geometrie aufweist, insbesondere als Dreieck ausgebildet ist.

4. Rückhaltevorrichtung nach Anspruch 3, wobei bei einer dreieckigen Geometrie des unteren Teils der Sperre (38) ein Basisabschnitt des dreieckigen Sperrenunterteils an den Durchlass (40) angrenzt.

5. Rückhaltevorrichtung nach einem der vorangehenden Ansprüche, wobei die Sperre (38) in vertikaler Orientierung derart dimensioniert ist, dass sich ein oberer Endpunkt (49) der Sperre (38) oberhalb des Kanals (34) ergibt.

6. Rückhaltevorrichtung nach einem der vorangehenden Ansprüche, mit einer unterhalb der Sperre (38) angeordneten Schwelle (50).

7. Rückhaltevorrichtung nach Anspruch 6, wobei die Schwelle (50) auf einer Oberseite (52) eine einen Abschnitt des Kanals (34) bildende Fläche aufweist.

8. Rückhaltevorrichtung nach einem der vorangehenden Ansprüche, wobei bei einer über die Rampe (12) zuströmenden Flüssigkeit, insbesondere Regenwasser, diese Flüssigkeit vom Zulauf (14) bis zum Durchlass (40) strömt.

9. Rückhaltevorrichtung nach einem der vorangehenden Ansprüche, mit einem elektrisch ansteuerbaren Ventil in der oder im Anschluss an die Ablauföffnung (41), wobei ein elektrisches Signal zur Ansteuerung des Ventils aufgrund einer Verunreinigung einer sich in der Rückhaltevorrichtung oder in Strömungsrichtung vor oder hinter der Rückhaltevorrichtung befindlichen Flüssigkeit generierbar ist.

## Claims

1. Retention device (10) having a collector, in particular a ramp component (12), and an inlet (14) connected thereto, a discharge opening (41) and a barrier (38),
**characterized by**
a channel (34) connected to the collector which begins in the region of the inlet (14) and ends in a passage (40) which is left open at an underside of the barrier (38),
wherein the discharge opening (41) lies in the channel (34) above the passage (40),
wherein the inlet (14) lies above the discharge opening (41), and
wherein the barrier (38) is widened in the region of the passage (40).

2. The retention device as claimed in claim 1, wherein the channel (34) is inclined upwards.

3. The retention device as claimed in claim 1 or 2, wherein, in order to widen the barrier (38), a bottom part thereof has a convex, in particular polygonal, geometry, in particular is designed in the form of a triangle.

4. The retention device as claimed in claim 3, wherein, in the case of a triangular geometry of the bottom part of the barrier (38), a base section of the triangular barrier bottom part borders the passage (40).

5. The retention device as claimed in one of the preceding claims, wherein, in its vertical orientation, the barrier (38) is sized so that an upper end point (49) of the barrier (38) is situated above the channel (34).

6. The retention device as claimed in one of the preceding claims having a sill (50) arranged below the barrier (38).

7. The retention device as claimed in claim 6, wherein, on a top side (52), the sill (50) has a surface which forms a section of the channel (34).

8. The retention device as claimed in one of the preceding claims, wherein when liquid, in particular rain water, flows in over the ramp (12), this liquid flows from the inlet (14) to the passage (40).

9. The retention device as claimed in one of the preceding claims having an electrically controllable valve in the discharge opening (41) or subsequent thereto, wherein an electrical signal for controlling the valve can be generated as a result of a contamination of a liquid in the retention device or in the flow direction before or after the retention device.

## Revendications

1. Dispositif de retenue (10) comportant un collecteur, en particulier un plan incliné (12) et une admission (14) dans le prolongement de ce dernier, une ouverture d'évacuation (41) et un dispositif d'arrêt (38),
**caractérisé par**
un canal (34) en prolongement du collecteur, lequel commence dans la zone de l'admission (14) et se termine dans un passage (40) resté libre sur une face inférieure du dispositif d'arrêt (38),
l'ouverture d'évacuation (41) étant située dans le canal (34) au-dessus du passage (40),
l'admission (14) étant située au-dessus de l'ouverture d'évacuation (41), et
le dispositif d'arrêt (38) étant élargi dans la zone du passage (40).

2. Dispositif de retenue selon la revendication 1, dans lequel le canal (34) est incliné vers le haut.

3. Dispositif de retenue selon la revendication 1 ou 2, dans lequel, en vue de l'élargissement du dispositif d'arrêt (38), une partie inférieure de celui-ci présente une géométrie convexe, en particulier polygonale, réalisée en particulier sous forme de triangle.

4. Dispositif de retenue selon la revendication 3, dans lequel, en présence d'une géométrie triangulaire de la partie inférieure du dispositif d'arrêt (38), un tronçon de base de la partie inférieure triangulaire dudit dispositif d'arrêt (38) est adjacent au passage (40).

5. Dispositif de retenue selon l'une quelconque des revendications précédentes, dans lequel le dispositif d'arrêt (38) est dimensionné dans le sens vertical de manière à former au-dessus du canal (34) un point supérieur (49) du dispositif d'arrêt (38).

6. Dispositif de retenue selon l'une quelconque des revendications précédentes, comportant un seuil (50) agencé en dessous du dispositif d'arrêt (38).

7. Dispositif de retenue selon la revendication 6, dans lequel le seuil (50) comporte, sur une face supérieure (52), une surface formant une portion du canal (34).

8. Dispositif de retenue selon l'une quelconque des revendications précédentes, dans lequel, lorsqu'un liquide, en particulier de l'eau de pluie, afflue par l'intermédiaire du plan incliné (12), ledit liquide circule depuis l'admission (14) jusque vers le passage (40).

9. Dispositif de retenue selon l'une quelconque des revendications précédentes, comportant dans l'ouverture d'évacuation (41) ou dans le raccordement à la dite ouverture d'évacuation une soupape pouvant être commandée électriquement, un signal électrique pouvant être généré pour commander la soupape à la suite d'une pollution d'un liquide situé dans le dispositif de retenue ou en amont ou en aval du dispositif de retenue dans le sens du flux.
